(19) **Europäisches Patentamt / European Patent Office / Office européen des brevets**

(11) **EP 3 333 859 A1**

(12) **EUROPEAN PATENT APPLICATION**

(43) Date of publication:
**13.06.2018  Bulletin 2018/24**

(21) Application number: **17188986.8**

(22) Date of filing: **01.09.2017**

(51) Int Cl.:
*H01F 1/055* (2006.01)    *H01F 1/08* (2006.01)
*C22C 38/00* (2006.01)    *C22C 38/10* (2006.01)
*C22C 38/14* (2006.01)    *C22C 38/16* (2006.01)
*B22F 3/16* (2006.01)    *H01F 41/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **21.11.2016  JP 2016226294**

(71) Applicant: **KABUSHIKI KAISHA TOSHIBA**
**Minato-ku**
**Tokyo**
**105-8001 (JP)**

(72) Inventors:
• **Okamoto, Keiko**
  **Tokyo 105-8001 (JP)**

• **Horiuchi, Yosuke**
  **Tokyo 105-8001 (JP)**
• **Sakurada, Shinya**
  **Tokyo 105-8001 (JP)**
• **Matsushita, Makoto**
  **Tokyo 105-8001 (JP)**
• **Takahashi, Norio**
  **Tokyo 105-8001 (JP)**
• **Hasebe, Toshio**
  **Tokyo 105-8001 (JP)**
• **Tokumasu, Tadashi**
  **Kanagawa-ken 210-0024 (JP)**

(74) Representative: **Hoffmann Eitle**
**Patent- und Rechtsanwälte PartmbB**
**Arabellastraße 30**
**81925 München (DE)**

(54) **PERMANENT MAGNET, ROTARY ELECTRIC MACHINE, AND VEHICLE**

(57)    A permanent magnet is expressed by a composition formula: $R_pFe_qM_rCu_tCo_{100-p-q-r-t}$. The magnet includes: a crystal grain including a matrix; and a grain boundary phase. The matrix has cell phase having a $Th_2Zn_{17}$ crystal phase, a cell wall phase dividing the cell phase, and a plurality of Cu high-concentration phases. An area ratio of Cu high-concentration phases to the matrix is not less than 0.2% nor more than 5.0%. In a 3 µm radius circle centered at a center of gravity of at least one of the Cu high-concentration phases, an average number of other Cu high-concentration phases is not less than 3 nor more than 15.

**EP 3 333 859 A1**

**Description**

FIELD

Arrangements described herein relate generally to a permanent magnet, a rotary electric machine, and a vehicle.

BACKGROUND

In general, a Nd-Fe-B-based magnet and a Sm-Co-based magnet are widely known as a high-performance rare-earth magnet. These magnets are constituted by multiple elements. Fe and Co play a role in a saturation magnetization increase. In rare-earth elements such as Nd and Sm, large magnetic anisotropy is induced in their 4f orbitals, thereby exhibiting large coercive force. Thus, bringing out a property of each constituent element makes it possible to achieve a high-performance magnet.

Such a high-performance magnet is mainly mounted on and used for electric devices such as motors, generators, speakers, and measuring instruments. In recent years, a need for industrial and household electric devices to save energy and to be made light and smaller has increased, and the development of a permanent magnet having magnetic properties corresponding thereto is in progress. Moreover, as part of a high efficiency promotion of the motors, the development of a permanent magnet applicable to a memory motor such as a variable-speed magnetic flux-type motor is one of very important subjects.

The Sm-Co-based magnet has a magnetic property excellent in heat resistance due to a high Curie temperature. Therefore, it can be applied to a motor being used under an environment in which a variation in temperature is large. A conventional Sm-Co-based magnet promotes improvement in a motor characteristic in a high temperature region while having high heat resistance and demagnetization resistance.

A characteristic of a motor is indicated by a variable-speed characteristic such as efficiency and loss, or the like at a torque value with respect to a rotation speed. An auxiliary machine such as an inverter is provided to rotate a motor. Occurrence of a motor terminal voltage exceeding a control voltage of the auxiliary machine causes a rapid torque decrease and a trouble. In torque in a low-speed rotation region, magnetization of a permanent magnet is mainly dominant, and therefore the magnet having high magnetization, such as the Nd-Fe-B-based magnet, is suitable. On the other hand, in a high-speed rotation region, interlinkage magnetic flux in proportion to the rotation speed occurs, and a terminal voltage increases. Therefore, by passing an electric current (field weakening current) for suppressing the interlinkage magnetic flux, the terminal voltage becomes less than or equal to a control voltage. Since the field weakening current is applied, a copper loss increases, resulting in a decrease in efficiency.

In contrast to this, use of a new concept magnet in combination of a Sm-Co-based permanent magnet which is capable of changing magnetization in response to an external field and has high recoil magnetic permeability and the Nd-Fe-B-based magnet is considered to allow efficiency in the high-speed rotation region to be improved while maintaining efficiency in the low-speed rotation region. In order to increase recoil magnetic permeability of the Sm-Co-based magnet, the technical development of structure control by a manufacturing condition, a composition, and analysis, and improvement in reproducibility, and the like is needed.

RELEVANT REFERENCES

Patent Reference

Reference1: JPA 2012-175738
Reference 2: JPA 2015-159691

BRIEF DESCRIPTION OF THE DRAWINGS

Fig. 1 is a cross-sectional schematic view illustrating a structure example of a permanent magnet.
Fig. 2 is a cross-sectional schematic view illustrating a structure example of a matrix.
Fig. 3 is a schematic view for explaining a distribution state of Cu high-concentration phases.
Fig. 4 is a schematic view illustrating a structure example of a motor.
Fig. 5 is a schematic view illustrating a structure example of a motor.
Fig. 6 is a schematic view illustrating a structure example of a generator.

Fig. 7 is a view illustrating a STEM image of a cross section of a permanent magnet.
Fig. 8 is a view illustrating a Cu mapping image by STEM-EDX.
Fig. 9 is a view illustrating a STEM image of a cross section of a permanent magnet.
Fig. 10 is a view illustrating a Cu mapping image by the STEM-EDX.
Fig. 11 is a view illustrating a STEM image of a cross section of a permanent magnet.
Fig. 12 is a view illustrating a Cu mapping image by the STEM-EDX.
Fig. 13 is a view illustrating a SEM image of the cross section of the permanent magnet.
Fig. 14 is a view illustrating a SEM image of the cross section of the permanent magnet.
Fig. 15 is a view illustrating a SEM image of the cross section of the permanent magnet.
Fig. 16 is a view illustrating a SEM image of the cross section the permanent magnet.
Fig. 17 is a view illustrating a SEM image of the cross section of the permanent magnet.
Fig. 18 is a view illustrating a SEM image of the cross section of the permanent magnet.
Fig. 19 is a chart illustrating B-H curves of the permanent magnets.
Fig. 20 is a schematic view illustrating a general-purpose model of a motor.
Fig. 21 is a chart illustrating a relationship between torque and a rotation speed of a motor.

## DETAILED DESCRIPTION

A permanent magnet of an embodiment is a permanent magnet expressed by a composition formula: $R_pFe_qM_rCu_tCo_{100-p-q-r-t}$. In the formula, R is at least one element selected from the group consisting of rare-earth elements, M is at least one element selected from the group consisting of Ti, Zr, and Hf, p is a number satisfying $10.8 \leq p \leq 11.6$ atomic percent, q is a number satisfying $24 \leq q \leq 40$ atomic percent, r is a number satisfying $0.88 \leq r \leq 4.5$ atomic percent, and t is a number satisfying $0.88 \leq t \leq 13.5$ atomic percent. The permanent magnet includes a crystal grain including a matrix and a grain boundary phase. The matrix has cell phase having a $Th_2Zn_{17}$ crystal phase, a cell wall phase dividing the cell phase, and a plurality of Cu high-concentration phases. Each of the Cu high-concentration phases has a Cu concentration higher than an average Cu concentration in the matrix and lower than a Cu concentration in the grain boundary phase. In a cross section including a c-axis of the $Th_2Zn_{17}$ crystal phase, an area ratio of the plurality of Cu high-concentration phases to the matrix is not less than 0.2% nor more than 5.0%. In a 3 $\mu$m radius circle centered at a center of gravity of at least one of the Cu high-concentration phases, an average number of other Cu high-concentration phases is not less than 3 nor more than 15.

Hereinafter, arrangements will be described with reference to the drawings. Note that the drawings are schematic, and for example, a relationship between a thickness and a planar size, thickness proportions of the respective layers, and the like are sometimes different from actual ones. Further, in the arrangements, substantially the same components are denoted by the same reference signs, and a description thereof is omitted.

(First Arrangement)

A permanent magnet of this arrangement is expressed by a composition formula: $R_pFe_qM_rCu_tCo_{100-p-q-r-t}$ (in the formula, R is at least one element selected from the group consisting of rare-earth elements, M is at least one element selected from the group consisting of Ti, Zr, and Hf, p is a number satisfying $10.8 \leq p \leq 11.6$ atomic percent, q is a number satisfying $24 \leq q \leq 40$ atomic percent, r is a number satisfying $0.88 \leq r \leq 4.5$ atomic percent, and t is a number satisfying $0.88 \leq t \leq 13.5$ atomic percent). An atomic ratio of the above-described composition formula is an atomic ratio when a total of R, Fe, M, Cu, and Co is set to 100 atomic percent, and the permanent magnet may include a slight amount of oxygen and carbon.

The R in the above-described composition formula is an element which enhances magnetic anisotropy of a magnet material. As an example of the element R, for example, one element or a plurality of elements selected from the group consisting of rare-earth elements including yttrium (Y), or the like can be used, and for example, samarium (Sm), cerium (Ce), neodymium (Nd), praseodymium (Pr), or the like can be used, and in particular, Sm is preferably used. For example, when a plurality of elements including Sm are used as the element R, setting a Sm concentration to 50 atomic percent or more of the total of elements applicable as the element R makes it possible to increase performance, for example, coercive force, of the magnet material. Note that Sm is further preferably 70 atomic percent or more, further 90 atomic percent or more of the elements applicable as the element R.

Setting a concentration of the element applicable as the element R to, for example, not less than 10.8 atomic percent nor more than 11.6 atomic percent makes it possible to increase the coercive force. When the concentration of the element applicable as the element R is less than 10.8 atomic percent, sufficient coercive force cannot be obtained due to precipitation of a large amount of $\alpha$-Fe, and when it exceeds 11.6 atomic percent, saturation magnetization decreases. The concentration of the element applicable as the element R is more preferably not less than 10.9 atomic percent nor more than 11.6 atomic percent, and further not less than 11.0 atomic percent nor more than 11.6 atomic percent.

The M in the above-described composition formula is an element capable of exhibiting large coercive force in a composition with a high Fe concentration. As the element M, for example, one element or a plurality of elements selected from the group consisting of titanium (Ti), zirconium (Zr), and hafnium (Hf) are used. When a content r of the element M exceeds 4.5 atomic percent, a hetero-phase containing the element M excessively is easily produced, and both the coercive force and the magnetization easily decrease. Further, when the content r of the element M is less than 0.88 atomic percent, an effect of increasing a Fe concentration easily decreases. The content r of the element M is more preferably not less than 1.15 atomic percent nor more than 3.57 atomic percent, further more than 1.49 atomic percent to 2.24 atomic percent or less, and further not less than 1.55 atomic percent nor more than 2.23 atomic percent.

The element M preferably includes at least Zr. In particular, setting Zr to 50 atomic percent or more of the element M makes it possible to increase the coercive force of the permanent magnet. On the other hand, because Hf is especially expensive in the element M, the usage thereof is preferably small even in a case of using Hf. For example, a content of Hf is preferably less than 20 atomic percent of the element M.

Cu is an element capable of exhibiting high coercive force in the magnet material. A content of Cu is preferably not less than 0.88 atomic percent nor more than 13.5 atomic percent, for example. Compounding a larger amount than the content leads to a significant decrease in the magnetization, and further a smaller amount than the content makes it difficult to obtain the high coercive force and a good squareness ratio. The content t of Cu is more preferably not less than 3.9 atomic percent nor more than 9.0 atomic percent, and further preferably not less than 4.4 atomic percent nor more than 5.7 atomic percent.

Fe is an element mainly responsible for the magnetization of the magnet material. Compounding a large amount of Fe makes it possible to increase the saturation magnetization of the magnet material, but in compounding Fe excessively, there is a possibility of making it difficult to obtain a desired crystal phase due to precipitation of $\alpha$-Fe or phase separation and decreasing the coercive force. Accordingly, a content q of Fe is preferably not less than 24 atomic percent nor more than 40 atomic percent. The content q of Fe is more preferably not less than 28 atomic percent nor more than 36 atomic percent, and further preferably not less than 30 atomic percent nor more than 33 atomic percent.

Co is an element responsible for the magnetization of the magnet material and capable of exhibiting the high coercive force. Further, compounding much Co makes it possible to obtain a high Curie temperature and enhance heat stability of magnetic characteristics. When a compounding amount of Co is small, these effects become small. However, when Co is added excessively, there is a possibility of decreasing a ratio of Fe relatively and leading to a decrease in the magnetization. Further, the magnetic characteristic, for example, the coercive force can be increased by replacing 20 atomic percent or less of Co with one element or a plurality of elements selected from the group consisting of Ni, V, Cr, Mn, Al, Si, Ga, Nb, Ta, and W.

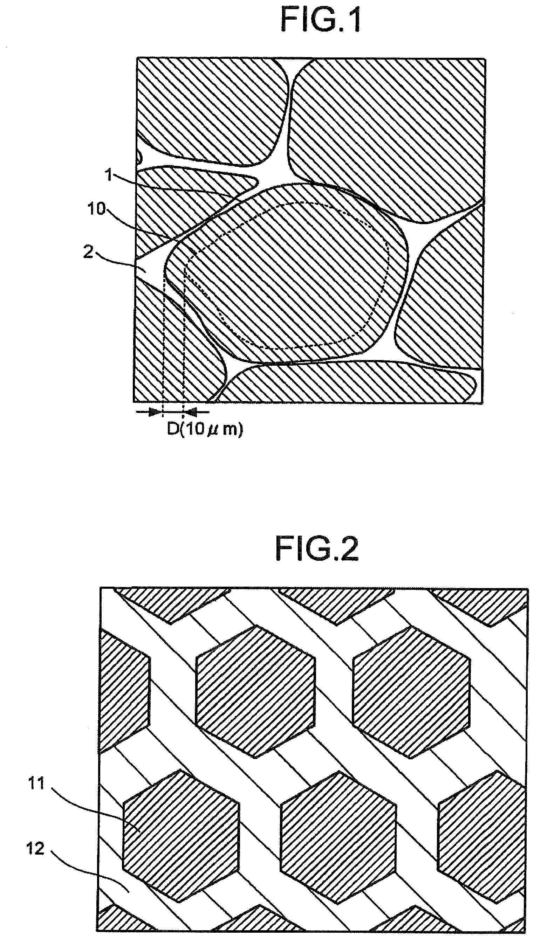

Fig. 1 is a cross-sectional schematic view illustrating a structure example of the permanent magnet of this arrangement. Fig. 1 illustrates part of a cross section of the permanent magnet. The permanent magnet illustrated in Fig. 1 includes a two-dimensional metallic structure including crystal grains 1 each having a hexagonal system $Th_2Zn_{17}$-type crystal phase (2-17-type crystal phase) and a grain boundary phase 2 provided among the crystal grains 1. Shapes of the crystal grains 1 and the grain boundary phase 2 are not limited to shapes illustrated in Fig. 1.

The crystal grains 1 constitute main phases (phases having the highest volume occupancy ratio among crystal phases and amorphous phases in the permanent magnet) of the permanent magnet. The crystal grain 1 has a matrix 10. The matrix 10 is defined by an intragranular region, in the crystal grain 1, 10 $\mu$m or more apart from the grain boundary phase 2. That is, an interval D between the matrix 10 and the grain boundary phase 2 is 10 $\mu$m or more.

Fig. 2 is a cross-sectional schematic view illustrating a structure example of the matrix 10. Fig. 2 illustrates part of a cross section including a c-axis of the $Th_2Zn_{17}$-type crystal phase. The c-axis of the $Th_2Zn_{17}$-type crystal phase preferably exists in parallel with an easy magnetization axis. Note that a parallel may include a state within $\pm 10$ degrees from a parallel direction (substantially parallel).

The matrix 10 illustrated in Fig. 2 includes cell phases 11 each having the $Th_2Zn_{17}$-type crystal phase and a cell wall phase 12. The above-described structure having the cell phases 11 and the cell wall phase 12 is also referred to as a cell structure. Cross-sectional shapes of the cell phases 11 and the cell wall phase 12 are not limited to the shapes illustrated in Fig. 2.

The cell wall phase 12 is formed so as to divide the cell phases 11. A Cu concentration in the cell wall phase 12 is preferably 1.2 times or more a Cu concentration in the $Th_2Zn_{17}$-type crystal phase. The cell wall phase 12 exists in a linear shape or in a plate shape in the cross section including the c-axis in the $Th_2Zn_{17}$-type crystal phase, for example. A structure of the cell wall phase 12 is not particularly limited, but for example, a hexagonal system $CaCu_5$-type crystal phase (1-5-type crystal phase) or the like can be cited.

Magnetic domain wall energy of the cell wall phase 12 is higher than magnetic domain wall energy of the $Th_2Zn_{17}$-type crystal phase, and this difference of the magnetic domain wall energy becomes a barrier to magnetic domain wall displacement. That is, the cell wall phase 12 functions as a pinning site, thereby allowing the magnetic domain wall displacement among a plurality of the cell phases 11 to be suppressed. This is also referred to as a pinning effect. Accordingly, the cell wall phase 12 is preferably formed so as to surround the cell phases 11.

In a Sm-Co-based magnet including Fe of 24 atomic percent or more, the Cu concentration in the cell wall phase 12 is preferably not less than 10 atomic percent nor more than 60 atomic percent. Increasing the Cu concentration in the cell wall phase 12 makes it possible to make a magnetic property good. A variation in the Cu concentration in the cell wall phase 12 easily occurs in a region where a Fe concentration is high, and it becomes difficult to obtain the pinning effect, thereby failing to keep the magnetic property good.

When a magnetic domain wall which deviates from the pinning site is displaced, the magnetization is reversed as much as the magnetic domain wall is displaced, and therefore the magnetization decreases. At a time of applying an external magnetic field, when the magnetic domain wall displacement occurs in a magnetic field lower than the coercive force of the magnet, the magnetization decreases, and the magnetic characteristics decrease.

The cell structure is a main factor in determining magnitude of the coercive force and one of factors in determining recoil magnetic permeability. The recoil magnetic permeability is defined as follows. A sintered body magnet is magnetized by a magnetizing apparatus or a pulsed magnetic field. Magnetization measurement is performed with respect to this magnet to obtain a B-H curve. A slope is found by performing a linear fit with respect to this B-H curve. This slope is regarded as the recoil magnetic permeability.

High recoil magnetic permeability indicates that the magnetization easily changes in response to an external field to be applied, for example, a magnetic field or an electric current. As a condition that the magnetization reversibly responds to the external field, a range in which an operating point does not exceed an inflection point (knick) of a demagnetization curve can be cited. The operating point is represented by a function of a magnetic flux density B and a magnetic field H, and indicates the magnetic property at a time of the magnet material responding to a certain external field. When the operating point exceeds the knick in response to the external field, the magnetization becomes irreversible. That is, demagnetization occurs, and a demagnetization curve different from the one hitherto formed is formed, resulting in the operating point moving thereon.

A magnet having high recoil magnetic permeability, preferably, in which the above-described knick does not appear in a second quadrant of coordinates in which a horizontal axis represents the magnetic field H and a vertical axis represents the magnetic flux density B, has high coercive force and is excellent in magnetization responsiveness to the external field. For example, it is preferable that a residual magnetization Br is 1.16 T or more, a coercive force Hcj on an M-H curve is 1600 kA/m or more, a coercive force HcB on a B-H curve is 700 kA/m or more, a squareness ratio is 90% or less, and a recoil magnetic permeability is not less than 1.15 nor more than 1.90, and further not less than 1.20 nor more than 1.50.

The permanent magnet to be used for a rotary electric machine is required to increase the recoil magnetic permeability and enhance responsiveness of the magnetization while maintaining the coercive force. The cell structure is necessary for exhibition of the coercive force, but keeping the squareness ratio high impairs the responsiveness of the magnetization to the external field.

In order to enhance the responsiveness of the magnetization while maintaining the coercive force, it is important to form a Cu-rich hetero-phase in the crystal grain. The permanent magnet of this arrangement has a plurality of Cu high-concentration phases as an intragranular hetero-phase in the matrix 10.

The Cu high-concentration phase has a Cu concentration higher than an average Cu concentration in the matrix and lower than a Cu concentration in the grain boundary phase. The Cu high-concentration phase includes a hetero-phase containing Cu or a hetero-phase (Cu-M rich phase) containing Cu and the element M, for example. Further, the Cu high-concentration phase indicates a hetero-phase which does not overlap with the grain boundary phase 2 or is not in contact with an end portion of the grain boundary phase 2.

In the cross section including the c-axis of the $Th_2Zn_{17}$-type crystal phase, an area ratio of the plurality of Cu high-concentration phases to the matrix 10 is preferably not less than 0.2% nor more than 5.0%. Further, it is preferable that the plurality of Cu high-concentration phases are not distributed uniformly in the matrix 10 but are distributed densely in a partial region in the cross section including the c-axis of the $Th_2Zn_{17}$-type crystal phase.

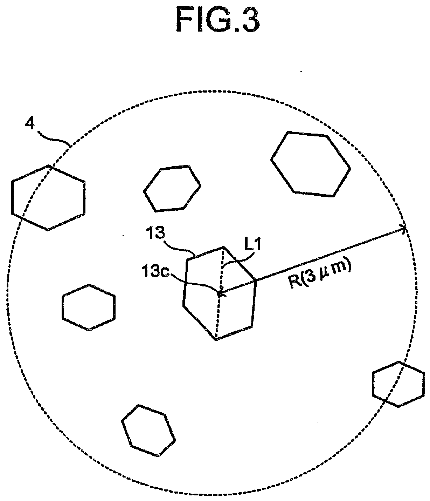

Fig. 3 is a schematic view for explaining a distribution state of the Cu high-concentration phases. As illustrated in Fig. 3, around at least one Cu high-concentration phase 13 among a plurality of Cu high-concentration phases 13, not less than 3 nor more than 15 Cu high-concentration phases 13 on average are preferably distributed in a circle 4 centered at a center of gravity 13c of the at least one Cu high-concentration phase 13 and having a radius R of 3 $\mu$m. Note that in the Cu high-concentration phases to be counted, an outer periphery 1 thereof has a size of 1.0 $\mu$m or more ($1 \geq 1.0$ $\mu$m). Note that the Cu high-concentration phase is regarded as the Cu high-concentration phase 13 in the circle 4 as long as at least part thereof is in the circle 4. Further, an average value of the numbers of the Cu high-concentration phases in ten arbitrarily selected locations in a grain is defined as an average number.

The center of gravity 13c of the Cu high-concentration phase is defined as follows. With respect to one arbitrary Cu high-concentration phase observed by a scanning electron microscope (SEM), a straight line L1 that is the longest among straight lines each connecting two points on an outer periphery of the Cu high-concentration phase is drawn. The midpoint of this straight line L1 is defined as the center of gravity of the Cu high-concentration phase.

As described above, in the permanent magnet of this arrangement, distributing Cu high-concentration phases which have been distributed largely in the grain boundary phase 2 so far, within a certain concentration in the grain makes it possible to suppress the squareness ratio in a certain range, increase the recoil magnetic permeability, and enhance the responsiveness of the magnetization while maintaining the coercive force.

Presence/absence of the Cu high-concentration phase, a concentration of each of the elements, and a distribution state can be examined by an observation with the SEM and measurement by SEM-energy dispersive X-ray spectroscopy (SEM-EDX) in a cross section of a sintered body. When the Cu high-concentration phase can be confirmed by the SEM, a concentration thereof is quantified by an area ratio.

The composition of the permanent magnet is measured by inductively coupled plasma atomic emission spectroscopy (ICP-AES), the SEM-EDX, scanning transmission electron microscope-EDX (STEM-EDX), or the like, for example. The volume ratio of each of the phases is comprehensively determined using observations with an electron microscope and an optical microscope, X-ray diffraction, and the like in combination, but can be found by an areal analysis method for an electron micrograph in which a cross section of the permanent magnet is photographed. As the cross section of the permanent magnet, a cross section of a substantially center portion of a surface having the largest area in a sample is used.

Metallic structures of the cell phase, the cell wall phase, and so on are recognized as follows, for example. First, a sample is observed by a STEM. At this time, observing the sample by the STEM makes it possible to specify a place of the grain boundary phase, and processing the sample using a focused ion beam (FIB) so that the grain boundary phase comes in sight makes it possible to increase observation efficiency. The above-described sample is a sample after an aging treatment. At this time, the sample is preferably a non-magnetized article.

Next, a concentration of each of the elements in the cell phase, the cell wall phase, and so on is measured using the STEM-EDX, for example.

When the concentration of each of the elements is measured by the STEM-EDX, a sample for measurement is cut out from an inner portion at a depth of 1 mm or more from a surface of the sample. Further, with respect to a plane parallel to an easy magnetization axis (c-axis), an observation is made at an observation magnification of 100k times.

Note that for the concentration measurement of the elements in each phase, a 3-dimension atom probe (3DAP) may be used. An analysis method using the 3DAP is an analysis method in which a sample for observation is field-evaporated by applying a voltage and an atomic arrangement is identified by detecting field-evaporated ions with a two-dimensional detector. Ionic species are identified by a time of flight taken to reach the two-dimensional detector, individually detected ions are detected continuously in a depth direction, and the ions are arranged (restructured) in the detected order, thereby allowing a three-dimensional atomic distribution to be obtained. As compared with the concentration measurement by the STEM-EDX, it is possible to more accurately measure each element concentration in each crystal phase.

The measurement of the element concentration in each phase using the 3DAP is performed according to a process described below. First, a sample is diced to thin pieces, from which a needle-shaped sample for pickup atom probe (AP) is produced by the FIB.

The measurement using the 3DAP is performed with respect to an inner portion of a sintered body. The measurement of the inner portion of the sintered body is as follows. First, at a middle portion of the longest side of a surface having a maximum area, the composition is measured at a surface portion and an inner portion of a cross section of the sintered body cut vertically to the side (vertically to a tangent of the middle portion if the side is a curve). As for measurement locations, first reference lines each drawn from a 1/2 position, as a starting point, of each side in the aforesaid cross section, inwardly and vertically to the side up to an end portion, and second reference lines each drawn from the middle of each corner portion, as a starting point, inwardly in a 1/2 position of an angle of an interior angle of the corner portion up to an end portion are provided, and positions of 1% of lengths of the first reference lines and the second reference lines from the starting points of these reference lines are defined as the surface portions, and positions of 40% thereof are defined as the inner portions. Note than when the corner portion has a curvature due to chamfering or the like, an intersection point where adjacent sides are extended is set as the end portion (the middle of the corner portion) of the side. In this case, the measurement location is a position not from the intersection point but from a portion in contact with the reference line.

By setting the measurement locations as described above, for example, when the cross section is a quadrangle, the reference lines are eight in total having four first reference lines and four second reference lines, and the measurement locations are eight locations each at the surface portion and the inner portion. In this arrangement, all the eight locations each at the surface portion and the inner portion are preferably within a range of the above-described composition, but at least four or more locations each at the surface portion and the inner portion may be within the range of the above-described composition. In this case, a relationship between the surface portion and the inner portion on one reference line is not specified. An observation is made after polishing and smoothing the thus specified observation surface of the inner portion of the sintered body. For example, observation locations by the STEM-EDX in the concentration measurement are 20 arbitrary points in each phase, an average value of measured values, which except a maximum value and a minimum value from measured values at these points, is found, and this average value is regarded as the concentration of each of the elements. The measurement using the 3DAP also conforms to this.

In a measured result of the concentration in the cell wall phase using the above-described 3DAP, a concentration profile of Cu in the cell wall phase is preferably sharper. Specifically, a full width at half maximum (FWHM) of the concentration profile of Cu is preferably 5 nm or less, and it is possible to obtain higher coercive force in this case. This is because a magnetic domain wall energy difference between the cell phase and the cell wall phase appears steeply and the magnetic domain wall is more easily subjected to pinning when a distribution of Cu in the cell wall phase is sharp.

The full width at half maximum (FWHM) of the concentration profile of Cu in the cell wall phase is found as follows. The highest value (PCu) of a Cu concentration is found from a Cu profile using the 3DAP based on the above-described method, and a width of a peak where the Cu concentration becomes a half value (PCu/2) of this highest value, namely, the full width at half maximum (FWHM) is found. Such measurement is performed with respect to ten peaks, and an average value of the above values is defined as the full width at half maximum (FWHM) of the Cu profile. When the full width at half maximum (FWHM) of the Cu profile is 3 nm or less, an effect of further increasing the coercive force improves, and it is possible to obtain a much more excellent improvement effect of the coercive force when the full width at half maximum is 2 nm or less.

The squareness ratio is defined as follows. First, a DC magnetizing property at room temperature is measured by a direct-current B-H tracer. Next, a residual magnetization $M_r$, a coercive force Hcj, and a maximum energy product (BH)max which are basic characteristics of a magnet are found by a B-H curve obtained from the measured result. At this time, a theoretical maximum value (BH)max is found using the $M_r$ by the following formula (1).

$$\text{(BH)max (theoretical value)} = M_r^2/4\ \mu_0 \ ... \ (1)$$

The squareness ratio is evaluated by a ratio between (BH)max obtained by the measurement and (BH)max (theoretical value), and is found by the following formula (2).

$$\text{(BH)max (actual measured value)}/\text{(BH)max (theoretical value)} \times 100 \ ... \ (2)$$

Next, an example of a method of manufacturing the permanent magnet will be described. First, alloy powder containing predetermined elements necessary for synthesis of the permanent magnet is prepared. Next, a metal mold placed in an electromagnet is filled with the alloy powder, and a green compact in which a crystal axis is oriented is manufactured by press-forming while applying a magnetic field.

For example, the alloy powder can be prepared through pulverization of an alloy ingot obtained through casting of molten metal by an arc melting method or a high-frequency melting method. The alloy powder may have a desired composition by compounding a plurality of powders different in composition. Further, the alloy powder may be prepared using a mechanical alloying method, a mechanical grinding method, a gas atomizing method, a reduction diffusion method, or the like. In production of an alloy thin strip by using a strip cast method, a flake-shaped alloy thin strip is produced, and thereafter the alloy powder is prepared by pulverization of the alloy thin strip. For example, pouring alloy molten metal by tilting to a chill roll rotating at a peripheral speed of not less than 0.1 m/sec nor more than 20 m/sec makes it possible to produce a thin strip coagulated continuously to a thickness of 1 mm or less. When the peripheral speed is less than 0.1 m/sec, a variation in composition in the thin strip easily occurs. Further, when the peripheral speed exceeds 20 m/sec, there is sometimes a decrease in a magnetic property such as excessive miniaturization of a crystal grain. The peripheral speed of the chill roll is not less than 0.3 m/sec nor more than 15 m/sec, and further preferably not less than 0.5 m/sec nor more than 12 m/sec.

Subjecting the above-described alloy powder or alloy material before pulverization to a heat treatment makes it possible to homogenize the material. For example, it is possible to pulverize the material using a jet mill, a ball mill, or the like. Note that pulverizing the material in an inert gas atmosphere or an organic solvent makes it possible to prevent oxidation of the powder.

When an average grain diameter of the powder after pulverization is not less than 2 $\mu$m nor more than 5 $\mu$m, and a proportion of the powder whose grain diameter is not less than 2 $\mu$m nor more than 10 $\mu$m is 80% or more of the whole powder, the degree of orientation becomes high, and further the coercive force becomes large. In order to achieve the above, pulverization with the jet mill is preferable.

For example, in a case of pulverization with the ball mill, even if the average grain diameter of the powder is not less than 2 $\mu$m nor more than 5 $\mu$m, a large amount of fine powder whose grain diameter is at a submicron level is contained. Aggregation of this fine powder makes the c-axis of the crystal in TbCu$_7$ phase become less likely to align in the direction of easy magnetization axis in magnetic field orientation at a time of pressing, and the degree of orientation easily deteriorates. Further, there is a possibility that such fine powder increases an amount of oxide in the sintered body to decrease the coercive force. In particular, when the Fe concentration is 24 atomic percent or more, in the powder after pulverization, the proportion of the powder with a grain diameter of 10 μm or more is desirably 10% or less of the whole powder. When the Fe concentration is 24 atomic percent or more, an amount of a hetero-phase in the ingot which is a raw material increases. In this hetero-phase, not only the amount of powder increases but also the grain diameter tends to increase such that the grain diameter sometimes becomes 20 μm or more.

When such an ingot is pulverized, for example, the powder with a grain diameter of 15 μm or more sometimes becomes the powder in the hetero-phase as it is. If the pulverized powder containing such coarse powder in the hetero-phase is pressed in a magnetic field to form a sintered body, the hetero-phase remains, causing a decrease in the coercive force, a decrease in the magnetization, a decrease in the squareness, or the like. The decrease in the squareness makes the magnetization difficult. In particular, magnetization after assembling to a rotor becomes difficult. Thus, setting the powder with a grain diameter of 10 μm or more to 10% or less of the whole powder makes it possible to increase the coercive force while suppressing a decrease in the squareness ratio in a high Fe concentration composition containing Fe of 24 atomic percent or more.

Next, sintering is performed. The sintering is performed under an inert gas atmosphere such as an Ar gas or a vacuum, for example. When the sintering is performed in the inert gas atmosphere, it is possible to promote suppression of evaporation of the element R such as Sm in which a vapor pressure is high. Thereby, there is an effect in which a deviation of the composition becomes less likely to occur. However, in the inert gas atmosphere, there is a possibility that hetero-phase formation and remaining of the inert gas into pores existing in the green compact prevent densification to fail to increase density. On the other hand, when the sintering is performed under the vacuum, suppression of the hetero-phase formation and a high density of the sintered body are achieved, but a transpiration amount of the element R in which the vapor pressure is high becomes large, the composition deviation occurs, and proper alloy composition control becomes difficult as the permanent magnet.

By a moisture amount in a sintering furnace and moisture adhering to and mixing in the green compact or the alloy powder, which are decomposed by a heat treatment, oxygen molecules and hydrogen molecules are produced. The oxygen molecule is bound to the element R, and an oxide of the element R is produced. The oxide of the element R becomes a factor that decreases all of the magnetic characteristics. Meanwhile, the hydrogen molecule is bound to a slight amount of mixed carbon to produce hydrocarbon. This hydrocarbon reacts with the element M, and a carbide of the element M is produced. Accordingly, it is important to control the moisture amount in the furnace and the moisture adhering to or being contained in the alloy powder or the green compact as much as possible.

With respect to the above points, it is effective to perform a sintering process (main sintering process) in the inert gas atmosphere such as the Ar gas after preforming a pre-processing process (temporarily sintering process) under the vacuum. By performing such a sintering process having the pre-processing process under the vacuum and the main sintering process in the inert gas atmosphere, the moisture adhering to or being contained in the green compact is decreased, and the production of the oxide and the carbide is reduced. Further, it is possible to suppress the evaporation of the element R such as Sm in which the vapor pressure is high. Further, it is possible to reduce the pores existing in the green compact and obtain a sintered body which is densified and has high density.

When magnetic powder (alloy powder) having the Fe concentration of 24 atomic percent or more is sintered, it is preferably kept under the vacuum until reaching a main sintering process temperature. Switching to the inert gas atmosphere simultaneously with reaching the main sintering temperature makes it possible to suppress transpiration of the element R such as Sm during sintering as much as possible.

When a temperature at which the vacuum is switched to the inert gas is set to a temperature $T_{V-G}$ and a holding temperature in the main sintering process is set to a temperature $T_S$, it is preferable to satisfy $T_{V-G} > T_S - 61°C$. At $T_S - 61°C$ or lower, the hetero-phase remains in the sintered body to cause a decrease in the magnetic characteristics. Moreover, it is impossible to densify the sintered body sufficiently, which makes the high density difficult. Further, it is preferable to satisfy $T_{V-G} > T_S - 50°C$, further $T_{V-G} \geq T_S - 40°C$, and further $T_{V-G} \geq T_S - 30°C$.

The degree of vacuum at a time of sintering (temporarily sintering process) under the vacuum is preferably $9 \times 10^{-2}$ Pa or less. When it exceeds $9 \times 10^{-2}$ Pa, the oxide of the element R is formed excessively, resulting in a factor of a deterioration of the magnetic property. Further, a carbide phase of the element M is easily produced excessively. The degree of vacuum in the temporarily sintering process is more preferably $5 \times 10^{-2}$ Pa or less, and more preferably $1 \times 10^{-2}$ Pa or less.

The holding temperature in the main sintering process is preferably 1230°C or lower. This is because when the Fe concentration becomes high, a melting point depression is caused, and therefore the transpiration of the element R at a time of sintering is at a minimum. The holding temperature is more preferably 1215°C or lower, further preferably 1205°C or lower, and further preferably 1195°C or lower.

A holding time in the main sintering process is preferably not less than 30 minutes nor more than 15 hours. This makes it possible to obtain the sintered body having the high density. When the holding time is less than 30 minutes, the sintered body is not densified sufficiently, and it becomes difficult to sufficiently increase the density of the sintered body. When the holding time exceeds 15 hours, Sm evaporates significantly, and therefore it becomes difficult to obtain a good magnetic property. The holding time is preferably not less than 1 hour nor more than 10 hours, and furthermore preferably not less than 1 hour nor more than 4 hours.

Next, a solution heat treatment is performed. The solution heat treatment is a heat treatment by which the $TbCu_7$-type crystal phase (1-7-type crystal phase) which becomes a precursor of a phase separation structure is formed. In the solution heat treatment, the heat treatment is performed by holding the sintered body at a temperature of not lower than 1100°C nor higher than 1190°C for not less than 30 minutes nor more than 24 hours. When the holding temperature in the solution heat treatment is lower than 1100°C and when it exceeds 1190°C, the proportion of the $TbCu_7$-type crystal phase in the sintered body after the solution heat treatment is small, and a possibility that the magnetic property decreases becomes high. The holding temperature is preferably not lower than 1120°C nor higher than 1180°C, and further not lower than 1120°C nor higher than 1170°C.

When the holding time in the solution heat treatment is less than 30 minutes, the constituent phase is caused to become non-uniform, and the coercive force decreases. Further, when the holding temperature in the solution heat treatment exceeds 24 hours, an amount of evaporation of the element R in the sintered body becomes large, and it becomes difficult to obtain a good magnetic property. Therefore, the holding time in the solution heat treatment is preferably not less than 1 hour nor more than 12 hours, and further preferably not less than 1 hour nor more than 8 hours. Note that suppression of oxidation of the element R in the powder is promoted also by performing the solution heat treatment under the vacuum or in the inert gas atmosphere such as the Ar gas.

Between the above-described sintering process and solution heat treatment, a heat treatment in which the sintered body is held at a temperature between the holding temperatures in both the heat treatments for a fixed period may be performed. This process is referred to as a quality improvement treatment or an intermediate heat treatment. The quality improvement treatment is a treatment which aims at controlling a metallic structure, especially, a macro structure. In the quality improvement treatment, for example, a heat treatment is preferably performed by holding the sintered body at a temperature 10°C or more lower than the holding temperature in the main sintering process and a temperature 10°C or more higher than the holding temperature in the solution heat treatment for not less than 2 hours nor more than 12 hours. From the viewpoint of a diffusion rate of the elements, it is impossible to completely remove the hetero-phase produced during the sintering in only the solution heat treatment. Further, in order to perform sufficient grain growth, there is a possibility that only the solution heat treatment is insufficient. Therefore, performing the quality improvement treatment makes it possible to promote the removal of the hetero-phase and the grain growth more.

The holding temperature at a time of the quality improvement treatment is preferably, for example, not lower than 1140°C nor higher than 1190°C. When the holding temperature is lower than 1140°C and when it exceeds 1190°C, there is a possibility that the magnetic property decreases. Further, when the holding time in the quality improvement treatment is less than 2 hours, element diffusion becomes insufficient, the hetero-phase is not sufficiently removed, and the effect on improvement in the magnetic property becomes small. Further, when the holding time exceeds 12 hours, an amount of evaporation of the element R becomes large, and it becomes difficult to obtain a good magnetic property.

The holding time in the quality improvement treatment is preferably not less than 4 hours nor more than 10 hours, and furthermore preferably not less than 6 hours nor more than 8 hours. Further, the quality improvement treatment is more preferably performed under the vacuum or in the inert gas atmosphere such as the Ar gas in order to prevent oxidation.

Next, an aging treatment of the sintered body is performed. The aging treatment is a treatment which is performed for the purpose of controlling the metallic structure on a microscale or a nanoscale and increasing the coercive force of the magnet. Accordingly, the metallic structure of the magnet is phase-separated into a plurality of phases by the aging treatment.

In order to form the metallic structure maintaining high coercive force and having high recoil magnetic permeability, for example, a temperature is increased to 900°C or higher, and a heat treatment is performed at the holding temperature for not less than 30 minutes nor more than 80 hours (first holding). The hetero-phase such as the Cu high-concentration phase which has been of concern up to now is appropriately generated in the grain by the first holding. For example, in the holding at 910°C for 40 hours, the hetero-phase which has not been seen in a grain up to now and which becomes the Cu high-concentration phase occurs. Controlling an area ratio and a distribution of this hetero-phase makes it possible to obtain the magnet having the high recoil magnetic permeability while maintaining the coercive force. When the holding temperature is 930°C or higher, the coercive force rapidly decreases. When the holding temperature is lower than 900°C, the squareness ratio becomes high, and the recoil magnetic permeability becomes small. Accordingly, the holding temperature in the aging treatment is preferably not lower than 900°C and lower than 930°C.

A temperature increasing rate at a time of reaching the holding temperature in the first holding in the aging treatment is preferably not less than 15°C/min nor more than 35°C/min, and further not less than 20°C/min nor more than 35°C/min. This is because the magnet having both sufficient coercive force and recoil magnetic permeability is produced with high reproducibility by controlling a hetero-phase concentration and a distribution form in the metallic structure and reducing a variation in the magnetic property. The temperature increasing rate affects a distribution of a formed phase because it acts on the diffusion rate and the degree of diffusion of the elements. When the temperature increasing rate is less than 15°C/min, the frequency with which the hetero-phase is produced during the temperature increase increases, and the characteristics deteriorate. Further, when it is more than 35°C/min, temperature control in the sintered body becomes difficult. For example, at a temperature increasing rate of 30°C/min, it is possible to produce the magnet in which a variation is suppressed and which has uniform characteristics.

Next, cooling is performed at a temperature decreasing rate of not less than 0.2°C/min nor more than 2.0°C/min, slow cooling is performed down to a temperature of not lower than 400°C nor higher than 650°C, and holding is performed at the reached temperature for not less than 30 minutes nor more than 8 hours (second holding). At a time of the slow cooling from the holding temperature in the first holding to the holding temperature in the second holding, when a cooling rate is less than 0.2°C/min, the thickness of the cell wall phase increases, and the magnetization easily decreases. Further, when it exceeds 2.0°C/min, a Cu concentration gradient between the cell phase and the cell wall phase is not formed sufficiently, and a decrease in the coercive force becomes remarkable. The cooling rate at a time of the slow cooling is more preferably not less than 0.4°C/min nor more than 1.5°C/min, and further not less than 0.5°C/min nor more than 1.3°C/min, for example. Further, in a case of cooling down to less than 400°C, the hetero-phase is easily formed. In a case of slow cooling down to a temperature of more than 650°C, the Cu concentration in the cell wall phase does not become proper, and sufficient coercive force is not sometimes obtained. Further, when the holding time in the second holding is less than 30 minute or when it exceeds 8 hours, there is a possibility that the hetero-phase concentration becomes excessive and a sufficient magnetic property is not obtained.

As a purpose of performing structure formation and control of the number of hetero-phases more accurately, in the aging treatment, a preliminary aging treatment may be performed before the main aging treatment in which the first holding and the second holding are performed. Further, in order to increase the magnetic property more, the holding temperature in the main aging treatment may be set in a multistage manner.

The permanent magnet can be manufactured by the above processes. In the above-described manufacturing method, it is possible to manufacture the permanent magnet having the high recoil magnetic permeability and having high external field responsiveness while maintaining proper coercive force.

(Second Arrangement)

The permanent magnet of the first arrangement is usable in various motors, generators, and the like included in an automobile, a railway vehicle, and the like. Further, the permanent magnet of the first arrangement is also usable as a stationary magnet and a variable magnet of a variable magnetic flux motor and a variable magnetic flux generator. The permanent magnet of the first arrangement is used to configure the various motors and the generators. In applying the permanent magnet of the first arrangement to the variable magnetic flux motor, the techniques disclosed in Japanese Laid-open Patent Publication No. 2008-29148 and Japanese Laid-open Patent Publication No. 2008-43172 are applicable to the configuration of the variable magnetic flux motor and a drive system, for example.

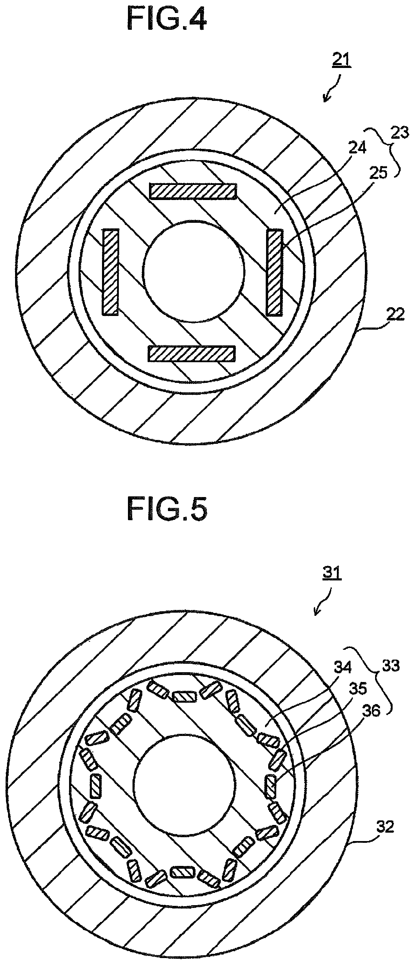

Next, a rotary electric machine including the above permanent magnet will be described referring to the drawings. Fig. 4 is a view illustrating an example of an interior permanent magnet synchronous motor (IPMSM, hereinafter referred to as an IPM motor) in this arrangement. In a motor 21 illustrated in Fig. 4, a rotor 23 is arranged in a stator 22. In an iron core 24 of the rotor 23, gaps are provided, and permanent magnets 25 which are the permanent magnets of the first arrangement are arranged in the gaps. This makes it possible to suppress separation and deformation of the magnets due to centrifugal force at a time of rotation. Further, arranging a plurality of the magnets makes it possible to achieve efficiency improvement, downsizing, and low-cost of the motor owing to effects derived from the magnetic properties which the respective permanent magnets have.

Fig. 5 is a view illustrating a variable magnetic flux motor according to this arrangement. In a variable magnetic flux motor 31 illustrated in Fig. 5, a rotor 33 is arranged in a stator 32. In an iron core 34 of the rotor 33, the permanent magnets of the first arrangement are arranged as stationary magnets 35 and variable magnets 36. A magnetic flux density (flux quantum) of the variable magnet 36 is allowed to be variable. The variable magnet 36 is not influenced by a Q-axis current and can be magnetized by a D-axis current because a magnetization direction thereof is perpendicular to a Q-axis direction. The rotor 33 is provided with a magnetization winding (not illustrated). The variable magnetic flux motor 31 has a structure in which by passing an electric current from a magnetization circuit to this magnetization winding, its magnetic field acts directly on the variable magnets 36.

According to the permanent magnet of the first arrangement, the stationary magnet 35 can obtain a suitable coercive force. In the case of applying the permanent magnet of the first arrangement to the variable magnet 36, it is only necessary to control the coercive force, for example, within a range of not less than 100 kA/m nor more than 500 kA/m by changing the above-described various conditions (the aging treatment condition and the like) of the manufacturing method. Note that the variable magnetic flux motor 31 illustrated in Fig. 5 can employ the permanent magnet of the first arrangement for both the stationary magnet 35 and the variable magnet 36, and the permanent magnet of the first arrangement may be used for either of the magnets. The variable magnetic flux motor 31 can output large torque with a small apparatus size, and is therefore suitable as a motor for vehicle of a hybrid vehicle, an electric vehicle, or the like required to have a high-output and compact motor.

It can be said that the permanent magnet is a key material which promotes saving of energy demanded on a motor characteristic. For example, in recent years, as a torque variable rotary electric machine, the IPM motor accompanied by flux weakening control can be cited. Since the permanent magnet containing the rare-earth elements has large magnetic force, the IPM motor using them allows a high-output and high-efficiency motor characteristic. However, large interlinkage magnetic flux occurs from a medium-speed rotation to a high-speed rotation region. Therefore, the flux weakening control is performed up to a condition that a maximum power supply voltage such as a battery or an overhead line voltage is limited.

The flux weakening control reduces the total interlinkage magnetic flux and suppresses an overvoltage generated at a time of high-speed rotation by passing a negative D-axis current through an armature winding of the motor using inverter control and generating interlinkage magnetic flux in a direction reverse to interlinkage magnetic flux of the permanent magnet. An electric current having no direct relation to an output is necessary for the above-described control, generally resulting in a decrease in efficiency in the high-speed rotation region in the IPM motor.

As a purpose of efficiency improvement in the high-speed rotation region, for example, there is known a motor (memory motor) which applies an external field such as an electric current to change the magnetization of the permanent magnet irreversibly and suppresses the interlinkage magnetic flux in the high-speed rotation region, or the like. Since the magnetization is controlled irreversibly, a control current is necessary for magnetizing, demagnetizing, or non-magnetizing. For example, a large current about three to six times as large as an electric current to be passed through the armature winding at a time of normal rotational motion is passed momentarily, creating an external field which changes the magnetization. A rare-earth magnet, in particular, a Sm-Co-based permanent magnet is suitable for the permanent magnet to be embedded in the rotor. This is because the Sm-Co magnet has a small temperature coefficient and is excellent in heat stability, compared with a Nd magnet.

Because the magnet itself increases and decreases the magnetization reversibly according to the number of rotations in the permanent magnet of the first arrangement, the control current necessary for the magnetizing, the demagnetizing, and the like becomes unnecessary. Further, because the permanent magnet of the first arrangement is a sintered magnet, it has high magnetization compared with a bond magnet constituted of the same composition, and therefore it is possible to generate sufficient interlinkage magnetic flux by magnetic force of the magnet itself without increasing the number of turns of a copper wire.

It is required that the efficiency in the above-described high-speed rotation region is increased sufficiently, while efficiency in a low-speed rotation region is also maintained, and efficiency in all the rotation regions is improved. Accordingly, by combining a magnet having high magnetization, for example, a Nd-Fe-B-based permanent magnet and the permanent magnet of the first arrangement so that an output in a low-speed rotation region becomes sufficient, high efficiency is achieved in all the rotation regions.

For example, a permanent magnet combining a first permanent magnet constituted of the permanent magnet of the first arrangement and a second permanent magnet in which a residual magnetization Br is 1.16 T or more, a coercive force Hcj is 800 kA/m or more and less than or equal to the coercive force Hcj of the first permanent magnet, and a recoil magnetic permeability is 1.1 or less may be used for the rotary electric machine. At this time, two or more first permanent magnets and second permanent magnets are arranged in parallel with or in series with each other on a magnetic circuit.

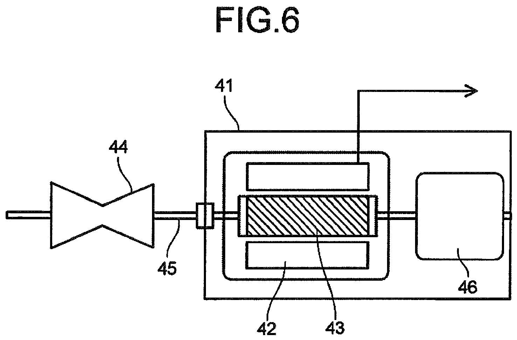

Fig. 6 illustrates a generator according to this arrangement. A generator 41 illustrated in Fig. 6 includes a stator 42 using the above-described permanent magnet. A rotor 43 disposed inside the stator 42 is connected via a shaft 45 to a turbine 44 disposed at one end of the generator 41. The turbine 44 is rotated by, for example, fluid supplied from the outside. Note that instead of the turbine 44 rotated by the fluid, the shaft 45 can also be rotated by transfer of dynamic rotation such as regenerated energy of a vehicle such as an automobile. The stator 42 and the rotor 43 can employ various publicly-known configurations.

The shaft 45 is in contact with a commutator (not illustrated) disposed on the opposite side to the turbine 44 with respect to the rotor 43, so that an electromotive force generated by the rotation of the rotor 43 is boosted to a system voltage and is transmitted as an output from the generator 41 via an isolated phase bus and a main transformer (not illustrated). The generator 41 may be any of an ordinary generator and a variable magnetic flux generator. Note that the rotor 43 generates an electrostatic charge by static electricity from the turbine 44 and an axial current accompanying power generation. Therefore, the generator 41 includes a brush 46 for discharging the electrostatic charges of the rotor 43.

As described above, by applying the above-described permanent magnet to the generator, effects such as high efficiency, downsizing, and low-cost are obtained.

EXAMPLES

In examples, specific examples of the permanent magnet will be described. Note that in the examples, the permanent magnet containing Zr as the element M will be described.

(Examples 1 to 3)

Raw materials were weighed and mixed together so as to become compositions presented in Table 1, and thereafter melted by arc under an Ar gas atmosphere to produce an alloy ingot. The produced ingot was vacuum-sealed in a quartz pipe, held at a holding temperature of 1160°C for 20 hours, and subjected to homogenization. Thereafter, the alloy was subjected to coarse pulverization and pulverization by a jet mill to prepare alloy powder of a magnet. The obtained alloy powder was press-formed while applying a magnetic field to produce a green compact.

Next, after placing the green compact in a sintering furnace and setting the degree of vacuum in the furnace to $3.2 \times 10^{-3}$ Pa, a temperature was increased to 1165°C, and the green compact was held at the reached temperature for 40 minutes. Thereafter, an Ar gas was introduced into the furnace, a temperature was increased to 1225°C at a gas flow rate of 2.0 L/min under the Ar atmosphere, and the green compact was subjected to sintering in which the green compact is held at the reached temperature for 6 hours.

Next, as the intermediate heat treatment, a temperature was decreased to 1185°C, and holding was performed at the reached temperature for 4 hours. Moreover, slow cooling was performed at a cooling rate of 5.0°C/min down to 1170°C, and holding was performed at the reached temperature for 16 hours as a melting treatment, and thereafter cooling was performed at a cooling rate of 150°C/min down to room temperature.

Next, the aging treatment was performed. As the aging treatment, after increasing a temperature at a temperature increasing rate of 15°C/min to 900°C as presented in Table 1 and performing holding (first holding) at the reached temperature for 40 hours, slow cooling was performed at a cooling rate of 0.5°C/min down to 400°C, and holding (second holding) was performed at the reached temperature for 1 hour. The permanent magnets each including a sintered body were produced by the above processes.

In the obtained magnets, a structure was observed and an element distribution of a metallic structure was examined by SEM, SEM-EDX, STEM, and STEM-EDX, and presence/absence of a hetero-phase on a microscale and a nanoscale and constituent elements thereof, and presence/absence of metallic structure formation and constituent elements thereof were examined. Further, when a Cu high-concentration phase was confirmed, an area ratio in one visual field was calculated, the same work was performed in three visual fields, and an average value thereof was examined in each of the magnetic bodies. Moreover, a residual magnetization Br [T], a coercive force Hcj [kA/m], a recoil magnetic permeability $\mu$r, and a squareness ratio [%] of each of the magnetic bodies were measured. Around at least one Cu high-concentration phase among a plurality of Cu high-concentration phases, the number of Cu high-concentration phases which were distributed in a 3 $\mu$m radius circle centered at a center of gravity 13c of the at least one Cu high-concentration phase was counted. This process is performed with respect to ten arbitrarily selected locations in a grain, and an average value thereof is defined as an average number. Table 2 presents each of the results.

A composition analysis of the produced magnets was performed by ICP atomic emission spectroscopy. Part of the magnet was picked, and pulverized in a mortar, and a certain amount of pulverized powder was weighted and melted by heating with a mixed acid of nitric acid and hydrochloric acid in a beaker made of quartz. After melting, air cooling was performed, and dilution was performed with pure water in a volumetric flask made of polytetrafluoroethylene (PFA) to produce a test solution. In the ICP-AES, in order to eliminate an emission intensity difference due to physical interference or ion interference, the composition analysis was performed with yttrium (Y) set in an internal standard method. A calibration curve was created by using three standard solutions in which a concentration ratio in an aqueous solution of each of the elements became 0:5:10 (an internal standard Y concentration ratio is 0:1:2), to find the composition of a main sample.

(Example 4)

The permanent magnet was produced under the same condition as that in Example 3 except the aging treatment. As the aging treatment, after increasing a temperature at a temperature increasing rate of 30°C/min to 900°C and performing holding (first holding) at the reached temperature for 40 hours, slow cooling was performed at a cooling rate of 0.5°C/min down to 400°C, and holding (second holding) was performed at the reached temperature for 1 hour.

In the obtained magnet, a structure was observed and an element distribution of a metallic structure was examined by the SEM, the SEM-EDX, the STEM, and the STEM-EDX, and presence/absence of a hetero-phase on a microscale and a nanoscale and constituent elements thereof, and presence/absence of metallic structure formation and constituent elements thereof were examined. Further, when a Cu high-concentration phase was confirmed, an area ratio in one visual field was calculated, the same work was performed in three visual fields, and an average value thereof was examined in each of the magnetic bodies. Moreover, a residual magnetization Br [T], a coercive force Hcj [kA/m], a recoil magnetic permeability $\mu$r, and a squareness ratio [%] of each of the magnetic bodies were measured. Around at least one Cu high-concentration phase among a plurality of Cu high-concentration phases, the number of Cu high-concentration phases which were distributed in a 3 $\mu$m radius circle centered at a center of gravity 13c of the at least one Cu high-concentration phase was counted. This process was performed with respect to ten arbitrarily selected locations in a grain, and an average value thereof is defined as an average number. Table 2 presents each of the results.

(Comparative Example 1, Comparative Example 2)

The permanent magnets were produced under the same condition as that in Example 3 except the aging treatment. In the aging treatment, the aging treatment was performed under the same condition as that in Example 3 except that the first holding was performed by increasing a temperature at a temperature increasing rate of 13°C/min to 840°C or 930°C and performing holding at the reached temperature for 40 hours.

In the magnets obtained after performing the aging treatment, a structure was observed and an element distribution of a metallic structure was examined by the SEM, the SEM-EDX, the STEM, and the STEM-EDX, and presence/absence of a hetero-phase on a microscale and a nanoscale and constituent elements thereof, and presence/absence of metallic structure formation and constituent elements thereof were examined. Further, when a Cu high-concentration phase was confirmed, an area ratio in one visual field was calculated, the same work was performed in three visual fields, and an average value thereof was examined in each of the magnetic bodies. Moreover, a residual magnetization Br [T], a coercive force Hcj [kA/m], a recoil magnetic permeability $\mu$r, and a squareness ratio [%] of each of the magnetic bodies were measured. Around at least one Cu high-concentration phase among a plurality of Cu high-concentration phases, the number of Cu high-concentration phases which were distributed in a 3 $\mu$m radius circle centered at a center of gravity 13c of the at least one Cu high-concentration phase was counted. Table 2 presents each of the results. Note that it was impossible to measure the recoil magnetic permeability $\mu$r in Comparative Example 2 because the coercive force was less than 1000 kA/m and a knickpoint occurred on a B-H curve.

(Comparative Example 3)

The permanent magnet was produced under the same condition as that in Example 3 except the aging treatment. In the aging treatment, after placing a sintered body after the solution heat treatment in a furnace and performing evacuation, an Ar gas was introduced, a flow rate was set to 2.0 L/min, and first a temperature was increased at a temperature increasing rate of 13°C/min to 700°C, and after holding the sintered body at the reached temperature for 2.5 hours, preliminary aging in which slow cooling was performed at a cooling rate of 2.0°C/min down to 300°C was performed, and thereafter as the main aging treatment, a temperature was increased at a temperature increasing rate of 13°C/min to 900°C, and the sintered body was held at the reached temperature for 40 hours.

In the magnet obtained after performing the aging treatment, a structure was observed and an element distribution of a metallic structure was examined by the SEM, the SEM-EDX, the STEM, and the STEM-EDX, and presence/absence of a hetero-phase on a microscale and a nanoscale and constituent elements thereof, and presence/absence of metallic structure formation and constituent elements thereof were examined. Further, when a Cu high-concentration phase was confirmed, an area ratio in one visual field was calculated, the same work was performed in three visual fields, and an average value thereof was examined in each of the magnetic bodies. Moreover, a residual magnetization Br [T], a coercive force Hcj [kA/m], a recoil magnetic permeability $\mu$r, and a squareness ratio [%] of each of the magnetic bodies were measured. Around at least one Cu high-concentration phase among a plurality of Cu high-concentration phases, the number of Cu high-concentration phases which were distributed in a 3 $\mu$m radius circle centered at a center of gravity 13c of the at least one Cu high-concentration phase was counted. Table 2 presents each of the results.

[Table 1]

| | Magnet Composition (Atomic Ratio) | Preliminary Aging Treatment | Holding Temperature in Aging Treatment (°C) | Temperature Increasing Rate (°C/min) |
|---|---|---|---|---|
| Example 1 | $Sm_{11.05}Co_{57.84}Fe_{24.08}Cu_{5.25}Zr_{1.78}$ | Absence | 900 | 15 |
| Example 2 | $Sm_{11.05}Co_{55.97}Fe_{25.95}Cu_{5.25}Zr_{1.78}$ | Absence | 900 | 15 |
| Example 3 | $SM_{11.05}Co_{53.59}Fe_{28.33}Cu_{5.25}Zr_{1.78}$ | Absence | 900 | 15 |
| Example 4 | $Sm_{11.05}Co_{53.59}Fe_{28.33}Cu_{5.25}Zr_{1.78}$ | Absence | 900 | 30 |
| Comparative Example 1 | $Sm_{11.05}Co_{53.59}Fe_{28.33}Cu_{5.25}Zr_{1.78}$ | Absence | 840 | 13 |

(continued)

|  | Magnet Composition (Atomic Ratio) | Preliminary Aging Treatment | Holding Temperature in Aging Treatment (°C) | Temperature Increasing Rate (°C/min) |
|---|---|---|---|---|
| Comparative Example 2 | $Sm_{11.05}Co_{53.59}Fe_{28.33}Cu_{5.25}Zr_{1.78}$ | Absence | 930 | 13 |
| Comparative Example 3 | $Sm_{11.05}Co_{53.59}Fe_{28.33}Cu_{5.25}Zr_{1.78}$ | Presence | 900 | 13 |

[Table 2]

|  | Area Ratio of Cu High-Concentration Phase (%) | The Number of Cu High-Concentration Phases (Pieces) | Residual Magnetization Br (T) | Coercive Force Hcj (kA/m) | Recoil Magnetic Permeability $\mu r$ | Squareness Ratio (%) |
|---|---|---|---|---|---|---|
| Example 1 | 0.74 | 12 | 1.176 | 1680 | 1.28 | 89 |
| Example 2 | 0.78 | 13 | 1.185 | 1780 | 1.25 | 87 |
| Example 3 | 0.8 | 10 | 1.189 | 1700 | 1.28 | 89 |
| Example 4 | 0.8 | 8 | 1.188 | 1840 | 1.22 | 88 |
| Comparative Example 1 | 0.1 | 2 | 1.197 | 1810 | 1.1 | 95 |
| Comparative Example 2 | 3 | 17 | 1.160 | 100 | - | 93 |
| Comparative Example 3 | 0.1 | 4 | 1.183 | 1760 | 1.11 | 91 |

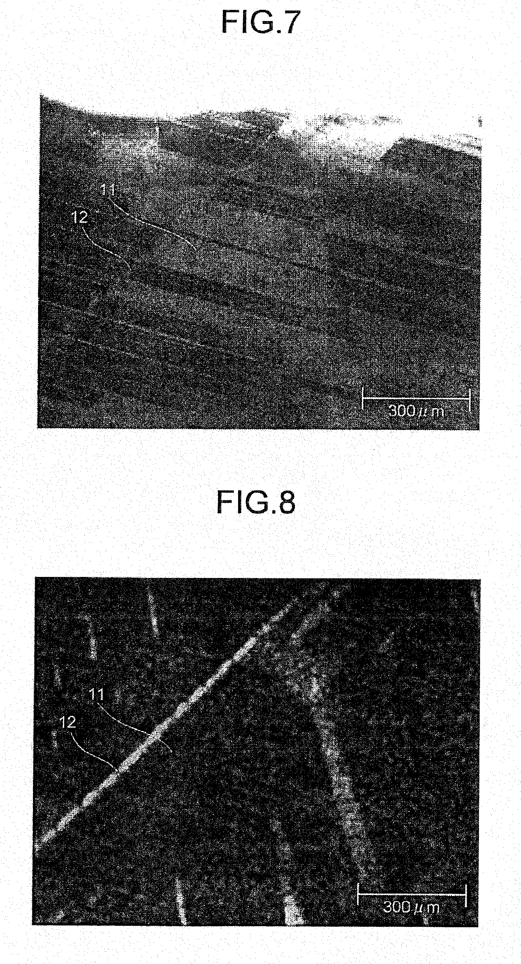

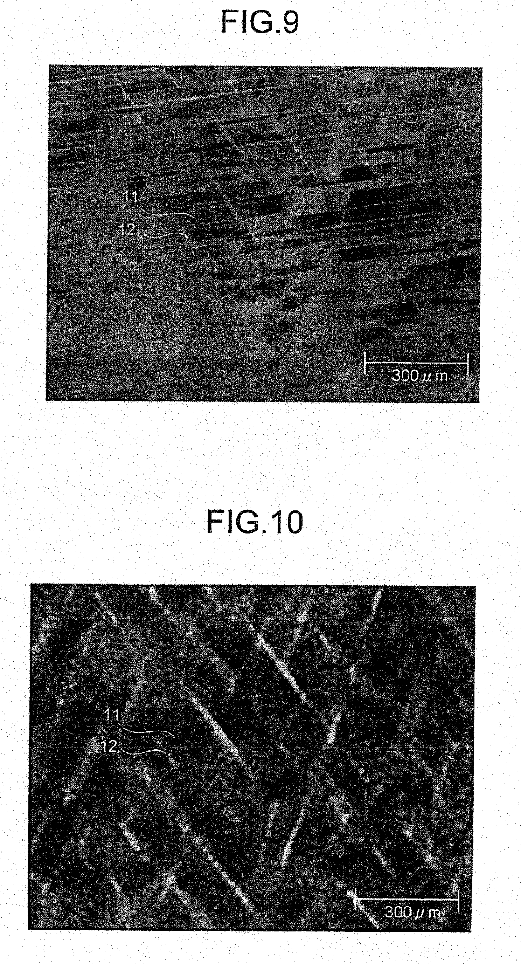

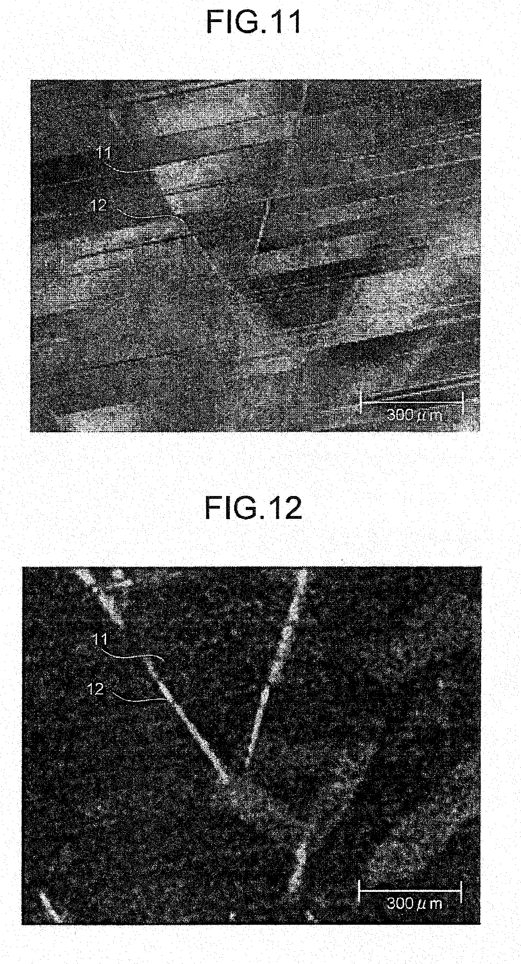

Fig. 7 is a STEM image of a cross section of the permanent magnet in Example 1, and Fig. 8 is a Cu mapping image by the STEM-EDX in the cross section illustrated in Fig. 7. Fig. 9 is a STEM image of a cross section of the permanent magnet in Comparative Example 1, and Fig. 10 is a Cu mapping image by the STEM-EDX in the cross section illustrated in Fig. 9. Fig. 11 is a STEM image of a cross section of the permanent magnet in Comparative Example 2, and Fig. 12 is a Cu mapping image by the STEM-EDX in the cross section illustrated in Fig. 11.

Any of the permanent magnets in the example and the comparative examples has a metallic structure having a cell phase 11 and a cell wall phase 12. Moreover, it is found that the cell phase of the permanent magnet in Example 1 has a diameter larger than those of the permanent magnets in Comparative Examples 1 and 2.

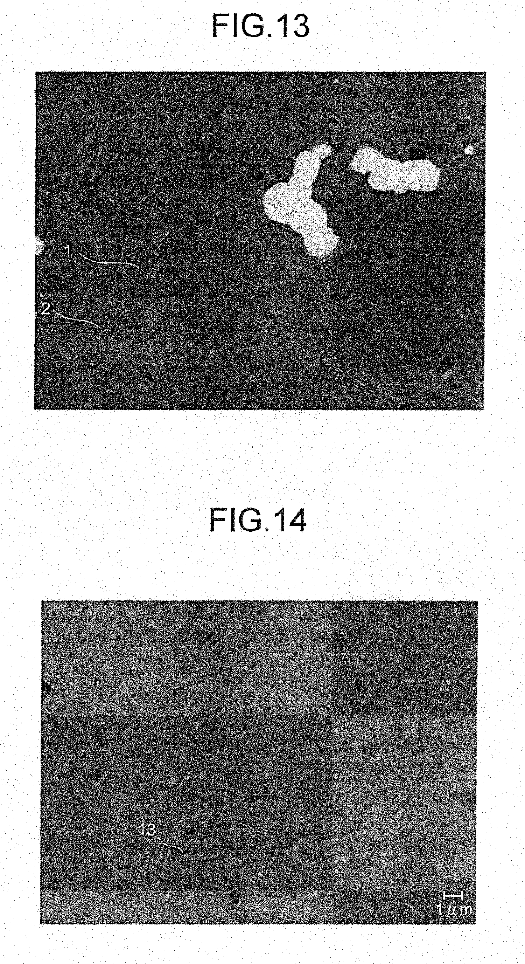

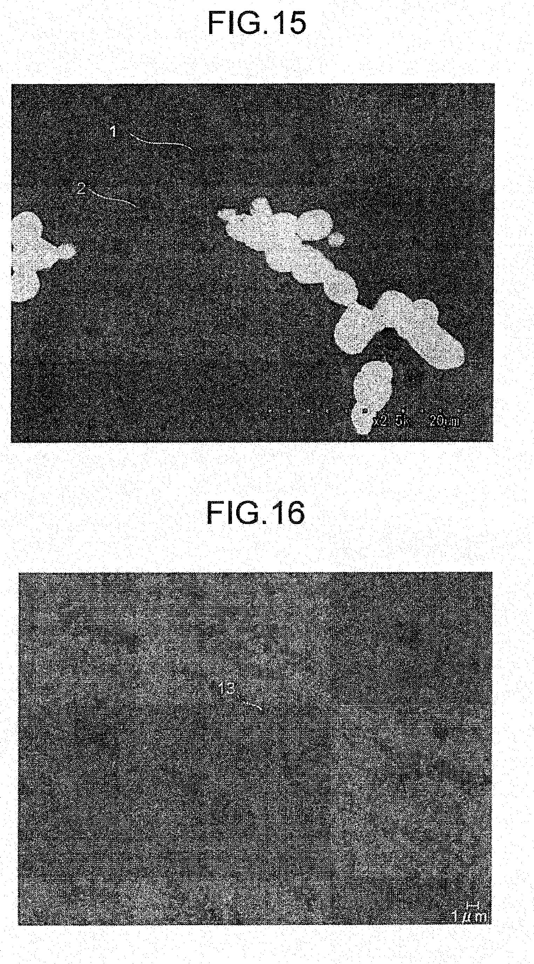

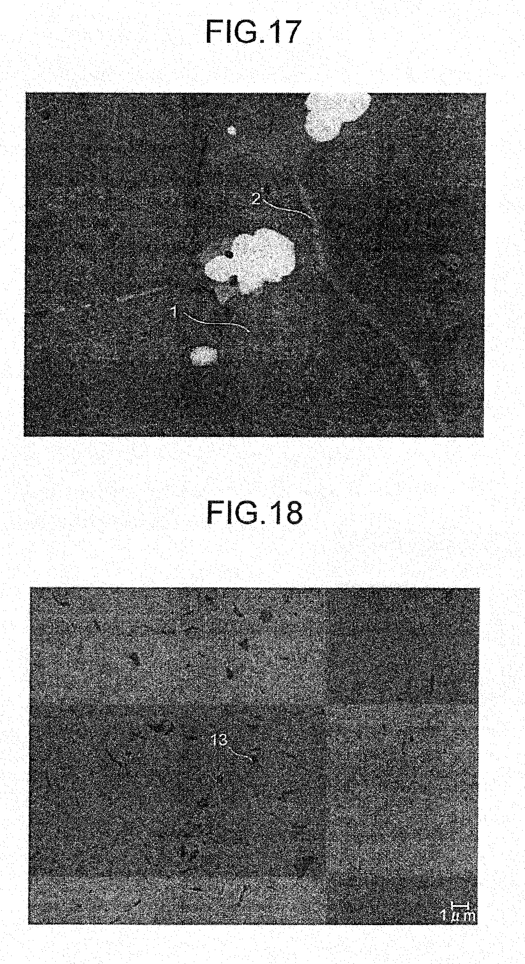

Fig. 13 is a SEM image (2500 magnifications) of the cross section of the permanent magnet in Example 1, and Fig. 14 is a SEM image (5000 magnifications) of part of the cross section illustrated in Fig. 13. Fig. 15 is a SEM image (2500 magnifications) of the cross section of the permanent magnet in Comparative Example 1, and Fig. 16 is a SEM image (5000 magnifications) of part of the cross section illustrated in Fig. 15. Fig. 17 is a SEM image (2500 magnifications) of the cross section of the permanent magnet in Comparative Example 2, and Fig. 18 is a SEM image (5000 magnifications) of part of the cross section illustrated in Fig. 17.

Any of the permanent magnets in the example and the comparative examples has a crystal grain 1 and a grain boundary phase 2. Moreover, it is found from Fig. 13 or Fig. 18 that the higher the holding temperature in the first holding in the aging treatment is, the more an area ratio of a Cu high-concentration phase 13 increases. Further, when around at least one Cu high-concentration phase 13 among a plurality of Cu high-concentration phases 13, the number of Cu high-concentration phases 13 which were distributed in a circle 4 centered at a center of gravity 13c of the at least one Cu high-concentration phase 13 and having a radius R of 3 $\mu$m was counted, the number fell within a range of not less than 3 nor more than 15 on average in the permanent magnet in Example 1, while it was less than 3 or more than 15 on average in the permanent magnets in Comparative Examples 1 and 2.

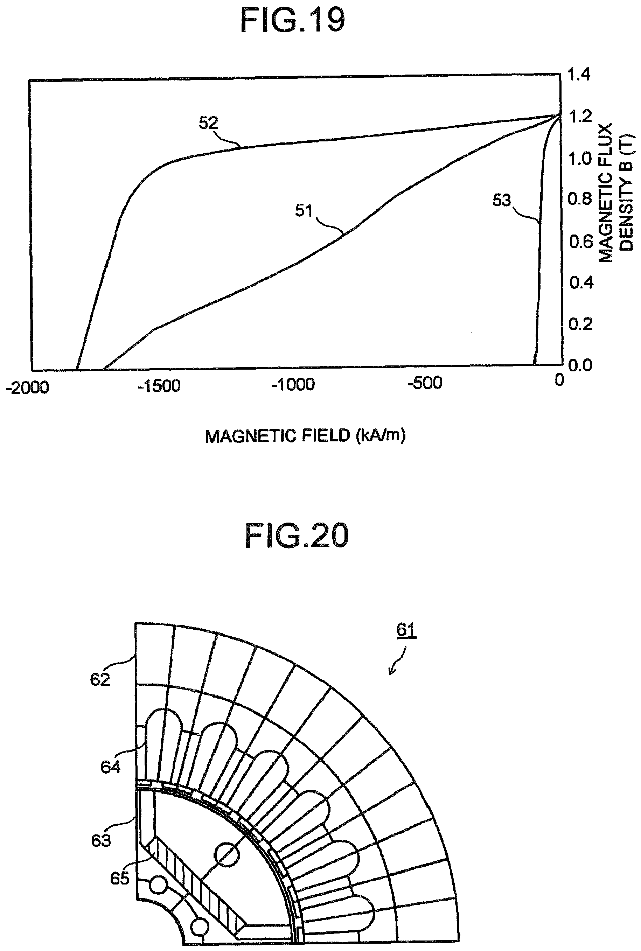

Fig. 19 is a chart illustrating B-H curves of the permanent magnets in Example 1 and Comparative Examples 1 and 2. A curve 51 indicates a measured result in Example 1, a curve 52 indicates a measured result in Comparative Example 1, and a curve 53 indicates a measured result in Comparative Example 2. As can be seen from Fig. 19, the permanent magnet in Example 1 has good responsiveness of the magnetization to an external field such as a magnetic field and has high recoil magnetic permeability in contrast with the permanent magnets in Comparative Examples 1 and 2. It is found from this that a distribution of a proper amount of the Cu high-concentration phase in the crystal grain is important in order to have the high recoil magnetic permeability. Applying the permanent magnet in the example to the rotary electric machine of the second arrangement allows improvement in motor efficiency and drive region extension to a high-speed rotation region.

(Example 5)

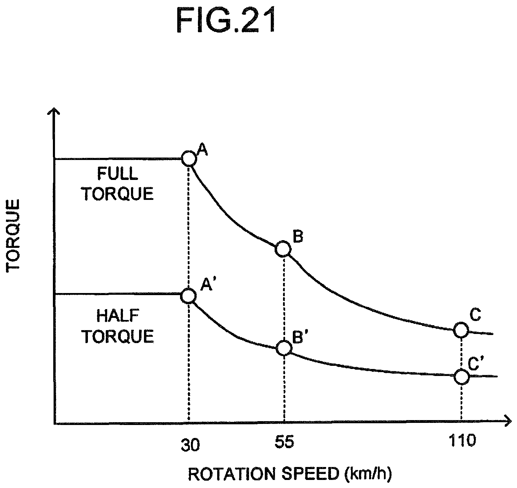

Combining the permanent magnet having high recoil magnetic permeability and a permanent magnet having high magnetization and low coercive force allows efficiency improvement in the high-speed rotation region while maintaining efficiency of a low rotation region. Fig. 20 is a view illustrating a general-purpose model JAC0581IPM of a surface permanent magnet synchronous motor (SPMSM, hereinafter referred to as a SPM motor). Fig. 21 is a chart illustrating a relationship between a rotation speed and torque, which is created by a magnetic field analysis using the general-purpose model illustrated in Fig. 20. A SPM motor 61 illustrated in Fig. 20 includes a stator 62 and a rotor 63. The stator 62 is provided with a slot 64 on which a magnetic winding is wound, and the rotor 63 is provided with a permanent magnet 65. As the permanent magnet 65, when a laminated magnet in which a volume ratio between a neodymium magnet and the permanent magnet of the first arrangement became 1:1 was mounted, an efficiency A (full torque) and A' (half torque) in a low-speed rotation (30 km/h) were almost equal to those when the neodymium magnet was mounted, and an efficiency C (full torque) and C' (half torque) in a high-speed rotation (110 km/h) improved by 0.2% in C and by 0.6% in C' rather than when the neodymium magnet was mounted. It is found from this that the responsiveness of the permanent magnet having high recoil magnetic permeability improves the efficiency in the high-speed rotation region.

While certain arrangements have been described, these arrangements have been presented by way of example only, and are not intended to limit the scope of the claims. Indeed, the magnet described herein may be embodied in a variety of other forms; furthermore, various omissions, substitutions and changes in the form of the magnet described herein may be made.

(Numbered Clauses relating to the arrangements)

1. A permanent magnet expressed by
a composition formula: $R_pFe_qM_rCu_tCo_{100-p-q-r-t}$
where R is at least one of rare-earth elements, M is at least one element selected from the group consisting of Ti, Zr, and Hf, p is a number satisfying $10.8 \leq p \leq 11.6$ atomic percent, q is a number satisfying $24 \leq q \leq 40$ atomic percent, r is a number satisfying $0.88 \leq r \leq 4.5$ atomic percent, and t is a number satisfying $0.88 \leq t \leq 13.5$ atomic percent,
the permanent magnet comprising:

a crystal grain including a matrix; and
a grain boundary phase,
wherein the matrix has a cell phase having a $Th_2Zn_{17}$ crystal phase, a cell wall phase dividing the cell phase, and a plurality of Cu high-concentration phases, a Cu concentration of each of the Cu high-concentration phases being higher than an average Cu concentration in the matrix and lower than a Cu concentration in the grain boundary phase,
wherein in a cross section including a c-axis of the $Th_2Zn_{17}$ crystal phase, an area ratio of the Cu high-concentration phases to the matrix is not less than 0.2% nor more than 5.0%, and
wherein in a 3 $\mu$m radius circle centered at a center of gravity of at least one of the Cu high-concentration phases, an average number of other Cu high-concentration phases is not less than 3 nor more than 15.

2. The magnet according to clause1,
wherein a residual magnetization Br is 1.16 T or more,
wherein a coercive force Hcj on an M-H curve is 1600 kA/m or more,
wherein a coercive force HcB on a B-H curve is 700 kA/m or more,
wherein a squareness ratio is 90% or less, and
wherein a recoil magnetic permeability is not less than 1.15 nor more than 1.90.

3. The magnet according to clause 1 or clause 2,
wherein 50 atomic percent or more of the element R in the composition formula is Sm, and

wherein 50 atomic percent or more of the element M in the composition formula is Zr.

4. The magnet according to any one of clauses 1 to 3,
wherein 20 atomic percent or less of Co in the composition formula is replaced by at least one element selected from the group consisting of Ni, V, Cr, Mn, Al, Ga, Nb, Ta, and W.

5. A permanent magnet comprising:

a first permanent magnet including the magnet according to any one of clauses 1 to 4; and
a second permanent magnet in which a residual magnetization Br is 1.16 T or more, a coercive force Hcj on an M-H curve is 800 kA/m or more and less than or equal to the coercive force Hcj of the first permanent magnet, and a recoil magnetic permeability is 1.1 or less,
wherein the first permanent magnet and the second permanent magnet are arranged in parallel with or in series with each other on a magnetic circuit.

6. A rotary electric machine comprising:

a stator; and
a rotor,
wherein the stator or the rotor includes the magnet according to any one of clauses 1 to 5.

7. The rotary electric machine according to clause 6,
wherein the rotor is connected via a shaft to a turbine.

8. A vehicle comprising the rotary electric machine according to clause 6.

9. A vehicle comprising the rotary electric machine according to clause 6,
wherein the rotor is connected to a shaft, and
wherein rotation is transmitted to the shaft.

**Claims**

1. A permanent magnet expressed by
a composition formula: $R_pFe_qM_rCu_tCo_{100-p-q-r-t}$
where R is at least one of rare-earth elements, M is at least one element selected from the group consisting of Ti, Zr, and Hf, p is a number satisfying $10.8 \leq p \leq 11.6$ atomic percent, q is a number satisfying $24 \leq q \leq 40$ atomic percent, r is a number satisfying $0.88 \leq r \leq 4.5$ atomic percent, and t is a number satisfying $0.88 \leq t \leq 13.5$ atomic percent,
the permanent magnet comprising:

a crystal grain including a matrix; and
a grain boundary phase,
wherein the matrix has a cell phase having a $Th_2Zn_{17}$ crystal phase, a cell wall phase dividing the cell phase, and a plurality of Cu high-concentration phases, a Cu concentration of each of the Cu high-concentration phases being higher than an average Cu concentration in the matrix and lower than a Cu concentration in the grain boundary phase,
wherein in a cross section including a c-axis of the $Th_2Zn_{17}$ crystal phase, an area ratio of the Cu high-concentration phases to the matrix is not less than 0.2% nor more than 5.0%, and
wherein in a 3 μm radius circle centered at a center of gravity of at least one of the Cu high-concentration phases, an average number of other Cu high-concentration phases is not less than 3 nor more than 15.

2. The magnet according to claim 1,
wherein a residual magnetization Br is 1.16 T or more,
wherein a coercive force Hcj on an M-H curve is 1600 kA/m or more,
wherein a coercive force HcB on a B-H curve is 700 kA/m or more,
wherein a squareness ratio is 90% or less, and
wherein a recoil magnetic permeability is not less than 1.15 nor more than 1.90.

3. The magnet according to claim 1,
wherein 50 atomic percent or more of the element R in the composition formula is Sm, and
wherein 50 atomic percent or more of the element M in the composition formula is Zr.

4. The magnet according to claim 1,
   wherein 20 atomic percent or less of Co in the composition formula is replaced by at least one element selected from the group consisting of Ni, V, Cr, Mn, Al, Ga, Nb, Ta, and W.

5. A permanent magnet comprising:

   a first permanent magnet including the magnet according to claim 1; and
   a second permanent magnet in which a residual magnetization Br is 1.16 T or more, a coercive force Hcj on an M-H curve is 800 kA/m or more and less than or equal to the coercive force Hcj of the first permanent magnet, and a recoil magnetic permeability is 1.1 or less,
   wherein the first permanent magnet and the second permanent magnet are arranged in parallel with or in series with each other on a magnetic circuit.

6. A rotary electric machine comprising:

   a stator; and
   a rotor,
   wherein the stator or the rotor includes the magnet according to claim 1.

7. The rotary electric machine according to claim 6,
   wherein the rotor is connected via a shaft to a turbine.

8. A vehicle comprising the rotary electric machine according to claim 6.

9. A vehicle comprising the rotary electric machine according to claim 6,
   wherein the rotor is connected to a shaft, and
   wherein rotation is transmitted to the shaft.

# FIG.1

D(10μm)

# FIG.2

# FIG.3

# FIG.4

# FIG.5

# FIG.6

# FIG.7

# FIG.8

# FIG.9

# FIG.10

# FIG.11

# FIG.12

# FIG.13

# FIG.14

# FIG.15

# FIG.16

# FIG.17

# FIG.18

# FIG.19

MAGNETIC FIELD (kA/m)

# FIG.20

# FIG.21

EP 3 333 859 A1

**EUROPEAN SEARCH REPORT**

Europäisches
Patentamt
European
Patent Office
Office européen
des brevets

Application Number

EP 17 18 8986

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 427 984 A (NINGBO) 23 March 2016 (2016-03-23) | 1-3,5-9 | INV. H01F1/055 |
| Y | * claims 1-4 * <br> * paragraph [0006] * | 4 | H01F1/08 C22C38/00 C22C38/10 C22C38/14 C22C38/16 |
| X | CN 105 427 987 A (NINGBO) 23 March 2016 (2016-03-23) | 1-3,5-9 | |
| Y | * paragraphs [0006], [0024] * <br> * claim 1 * | 4 | ADD. B22F3/16 H01F41/02 |
| Y | US 2016/155548 A1 (HORIUCHI ET AL) 2 June 2016 (2016-06-02) | 4 | |
| A | * paragraph [0063] * <br> * tables 1, 2 * | 1-3,5-9 | |

TECHNICAL FIELDS
SEARCHED     (IPC)

H01F

The present search report has been drawn up for all claims

| Place of search | Date of completion of the search | Examiner |
|---|---|---|
| Munich | 19 April 2018 | Subke, Kai-Olaf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

30

## ANNEX TO THE EUROPEAN SEARCH REPORT
## ON EUROPEAN PATENT APPLICATION NO.

EP 17 18 8986

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2018

| Patent document cited in search report | | Publication date | Patent family member(s) | | Publication date |
|---|---|---|---|---|---|
| CN 105427984 | A | 23-03-2016 | NONE | | |
| CN 105427987 | A | 23-03-2016 | NONE | | |
| US 2016155548 | A1 | 02-06-2016 | CN | 107077936 A | 18-08-2017 |
| | | | EP | 3226262 A1 | 04-10-2017 |
| | | | JP | 5985738 B1 | 06-09-2016 |
| | | | JP | WO2016084118 A1 | 27-04-2017 |
| | | | KR | 20170021877 A | 28-02-2017 |
| | | | US | 2016155548 A1 | 02-06-2016 |
| | | | WO | 2016084118 A1 | 02-06-2016 |

EPO FORM P0459

For more details about this annex : see Official Journal of the European Patent Office, No. 12/82

**EP 3 333 859 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012175738 A
- JP 2015159691 A
- JP 2008029148 A
- JP 2008043172 A